# FASCICULE DE BREVET EUROPEEN

(11) **EP 3 152 084 B1**
(45) Date de publication et mention de la délivrance du brevet: **20.12.2017**
(21) Numéro de dépôt: 14735998.8
(22) Date de dépôt: 05.06.2014
(51) Int. Cl.: B60R 16/03, H02J 1/14

(54) **PROCEDE DE GESTION DE L'ALIMENTATION DE SYSTEMES ELECTRIQUES D'UN VEHICULE AUTOMOBILE**
VERFAHREN ZUR VERWALTUNG DER STROMVERSORGUNG DER ELEKTRISCHEN SYSTEME EINES KRAFTFAHRZEUGS
METHOD OF MANAGING THE POWER SUPPLY OF ELECTRICAL SYSTEMS OF A MOTOR VEHICLE

(43) Date de publication de la demande: 12.04.2017
(73) Titulaire: RENAULT s.a.s., 92100 Boulogne-Billancourt (FR)
(72) Inventeur: PLANAS, Thierry, F-78310 Maurepas (FR); GEHIN, Sébastien, F-31170 Tournefeuille (FR)
(86) Numéro de dépôt international: PCT/FR2014/051342
(87) Numéro de publication internationale: WO 2015/185808

(56) Documents cités:
- DE-A1-102006 002 407
- FR-A1- 2 971 896

## Description

La présente invention a pour objet un procédé de gestion de l'alimentation de systèmes électriques d'un véhicule automobile.

L'augmentation croissante des prestations électriques dans les véhicules engendre une augmentation de la consommation électrique desdits véhicules. Ceci implique une production et une réserve d'énergie électrique plus importante ayant un impact direct sur la taille (volume, poids) de la batterie et/ou de l'alternateur. Lorsque le moteur est à l'arrêt, la batterie sert à alimenter les équipements qui doivent rester sous tension, tandis que l'alternateur fonctionne lorsque le moteur tourne. Il a pour rôle de recharger la batterie et de fournir l'énergie nécessaire au bon fonctionnement de tous les équipements électriques.

Ces augmentations de taille de la batterie et de l'alternateur ont pour conséquence une augmentation du coût final ainsi que du poids global des véhicules. A ceci s'ajoute également des contraintes sur les volumes d'implantation de ces pièces dans les véhicules.

L'augmentation du poids du véhicule a un impact direct sur l'accroissement de la consommation en carburant, et donc du rejet de dioxyde de carbone, qui est une donnée sensible pour le positionnement sur le marché de vente des véhicules et aussi le respect de certaines réglementations. De plus une augmentation de coût du véhicule nuit à la compétitivité économique.

Il apparaît ainsi nécessaire d'optimiser au plus juste la taille de la batterie et/ou de l'alternateur malgré l'augmentation de la consommation électrique totale du véhicule.

Le document FR2971896 divulgue un procédé de gestion de l'alimentation en énergie électrique des équipements électriques d'un véhicule automobile par apport dynamique en fonction d'au moins l'état de charge du ou des stockeur(s) de l'énergie électrique par, si nécessaire, délestage sélectif et variable dans le temps d'au moins une partie des équipements électriques sollicités, dans lequel le taux d'activation des équipements électriques est déterminé en établissant un ordre de délestage dynamique, qui évolue en fonction des sollicitations précédentes des différents équipements électriques afin de faire converger les temps d'activation des équipements électriques sollicités vers un même temps et ou d'allouer à chaque équipement la même quantité d'énergie.

Les documents WO2004/026614 et US 5,991,669 décrivent un procédé dans lequel on détermine pour chaque actionneur une puissance désirée pour satisfaire des demandes de conduite et la puissance électrique nécessaire pour satisfaire le besoin. Lorsque la puissance électrique totale dépasse une puissance autorisée, on diminue la puissance de certains actionneurs.

Ce type de procédé a pour inconvénient qu'il nécessite de connaître la puissance électrique consommée par des ensembles de consommateurs.

La présente invention vise à remédier à ces inconvénients.

Elle propose en particulier un procédé simple et économique de la gestion de l'alimentation de systèmes électriques d'un véhicule automobile, qui permet d'optimiser au plus juste la taille de la batterie et/ou de l'alternateur.

L'invention a ainsi pour objet un procédé de gestion de l'alimentation de systèmes électriques d'un véhicule automobile muni d'une batterie et d'un alternateur.

Le procédé selon l'invention comprend les étapes de la revendication 1.

Par « délestage d'un système électrique » au sens de l'invention, on entend une limitation partielle ou totale de l'alimentation électrique dudit système.

Avantageusement, la commande d'un délestage n'est pas fonction de la puissance électrique consommée par les systèmes électriques du véhicule.

Dans un premier mode de réalisation, un délestage est commandé lorsque la capacité de production électrique de l'alternateur du véhicule est supérieure à un seuil prédéterminé et/ou lorsque le niveau de charge de la batterie est inférieur à un seuil prédéterminé.

Selon l'invention, dans un deuxième mode de réalisation, un délestage est commandé chaque fois que la capacité de production électrique de l'alternateur ou le niveau de charge de la batterie atteint un seuil prédéterminé issu d'un groupe de seuils prédéterminés. A chaque seuil prédéterminé est associé un délestage spécifique.

Dans un troisième mode de réalisation, un délestage est commandé lorsque la capacité de production électrique de l'alternateur du véhicule ou le niveau de charge de la batterie présente une vitesse de variation prédéterminée, ou une persistance de dépassement ou de rapprochement d'un seuil prédéterminé.

Le troisième mode de réalisation peut être combiné avec le premier ou le deuxième mode de réalisation.

La capacité de production électrique de l'alternateur peut être déterminée en fonction de conditions environnementales, comme par exemple l'état du moteur et le régime moteur, et de la mesure de la charge de l'alternateur.

Le niveau de charge de la batterie peut être déterminé en fonction de conditions environnementales, comme la température ou le vieillissement de la batterie, et de mesures de la tension et/ou du courant de la batterie.

La commande de délestage peut être appliquée à un dispositif de gestion des alimentations électriques. Dans ce cas, le dispositif de gestion des alimentations électriques peut être apte à commander des systèmes électriques aptes à être délestés en coupant leur alimentation.

La commande de délestage peut également être appliquée directement à des systèmes électriques.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre sous forme de schéma bloc un procédé selon un exemple comparatif.
- la figure 2 illustre sous forme de schéma bloc un procédé selon l'invention, conformément à un deuxième mode de réalisation,
- la figure 3 illustre sous forme de schéma bloc un procédé selon l'invention, conformément à un troisième mode de réalisation,
- la figure 4 illustre sous forme de schéma bloc un procédé selon l'invention, conformément à un quatrième mode de réalisation, et
- la figure 5 illustre sous forme de schéma bloc un procédé selon l'invention, conformément à un cinquième mode de réalisation.

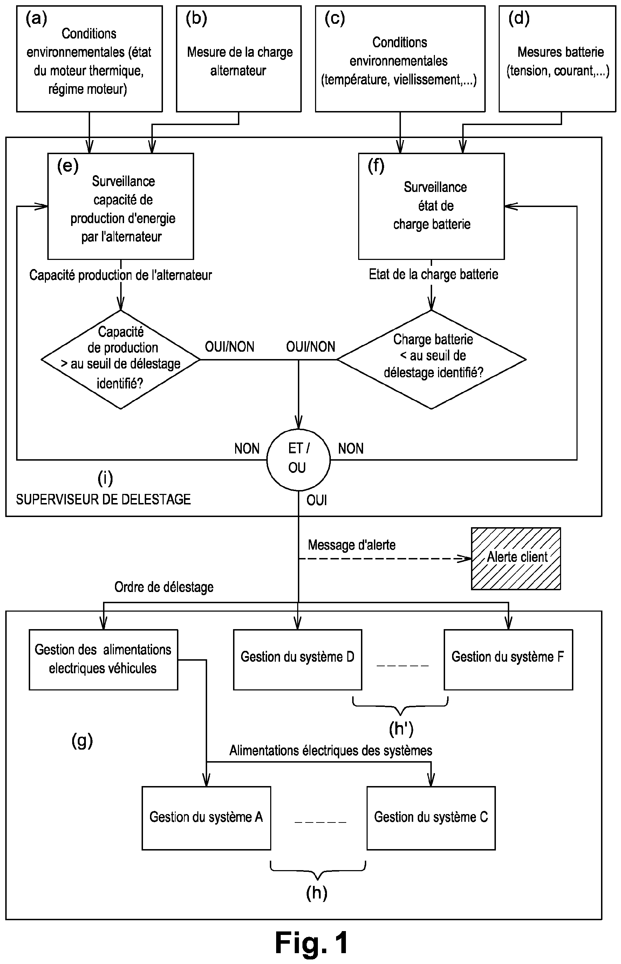

Tel qu'illustré aux figures 1 à 5, l'invention porte sur un envoi d'ordre de délestage à différents systèmes consommateurs d'énergie électrique (référencés (g), (h), et (h') sur les figures) en fonction de deux données représentatives de l'énergie électrique disponible dans le véhicule (référencées (e) et (f) sur les figures). Ceci va permettre de ne pas sur-dimensionner la taille de la batterie et/ou de l'alternateur tout en garantissant un niveau d'énergie électrique suffisant pour les systèmes vitaux du véhicule.

L'ordre de délestage peut se composer d'un ordre simple (marche/arrêt) ou d'un ordre à plusieurs niveaux (groupe1, groupe 2, .... , groupe N). Le choix des différents niveaux de délestage peut être défini selon des critères de sélection (gros consommateurs, systèmes peu visibles, systèmes dits de confort) permettant ainsi un délestage successif des groupes d'équipement électrique.

Conformément à un premier exemple comparatif tel qu'illustré à la figure 1, un superviseur de délestage (i) va interpréter deux données principales pour réaliser l'ordre de délestage:
- la capacité de production de l'alternateur estimée par le bloc (e) à partir de données externes (a) et (b) ; les conditions (a) sont des données existantes circulant par exemple sur le réseau CAN (pour Controller Area Network en langue anglaise) du véhicule, la charge de l'alternateur (b) est quant à elle une donnée existante circulant également par exemple sur le réseau CAN ;
- l'état de charge de la batterie estimée par le bloc (f) à partir de données externes (c) et (d).

La première donnée estimée par le bloc (e) est ensuite comparée à un seuil de capacité de production de l'alternateur pour lequel on juge qu'un délestage est nécessaire vis-à-vis de la capacité de production de l'alternateur. Ce seuil peut être défini suivant différents critères, comme par exemple la limite de capacité de production de l'alternateur, ou la marge à X% de capacité de production de l'alternateur.

La deuxième donnée estimée par le bloc (f) est ensuite comparée à un seuil de niveau de charge de la batterie pour lequel on juge qu'un délestage est nécessaire vis-à-vis de l'état de charge de la batterie. Ce seuil peut être défini suivant différents critères, comme par exemple la limite basse de charge batterie acceptable suivant les besoins véhicule en fonction du type de batterie.

Les systèmes soumis au délestage sont choisis selon différents critères suivant le domaine d'application, comme par exemple les systèmes n'impactant pas la sécurité du conducteur, les gros consommateurs d'énergie électrique, ou encore les systèmes peu visibles du conducteur.

L'ordre de délestage est ensuite envoyé aux différents systèmes (g), (h) et (h') lorsque l'un au moins des deux seuils identifiés est dépassé. L'application de cet ordre de délestage peut s'effectuer suivant deux variantes:
- l'ordre de délestage est envoyé au gestionnaire des alimentations électriques du véhicule (g) pour que celui-ci coupe des alimentations électriques d'un certain nombre d'équipements électriques ou de calculateurs électroniques qui pilotent les systèmes électriques (h) et à chaque système électrique du véhicule (h'),
- l'ordre de délestage est composé de plusieurs niveaux intégrant différents systèmes à délester (ex: niveau 1: système D ; niveau 2: systèmes D, E et F, niveau X: systèmes A, B, C, D, E, F). L'application des ces différents niveaux va se faire de façon successive lorsque les deux seuils sont toujours dépassés alors que l'ordre de délestage de niveau (n-1) a été appliqué depuis un certains temps t (t étant à définir lors de la mise au point du système global).

Les occupants du véhicule peuvent être informés de l'application d'un ordre de délestage par un retour de type Interface Homme Machine ("message d'alerte" en flèche pointillée sur la figure).

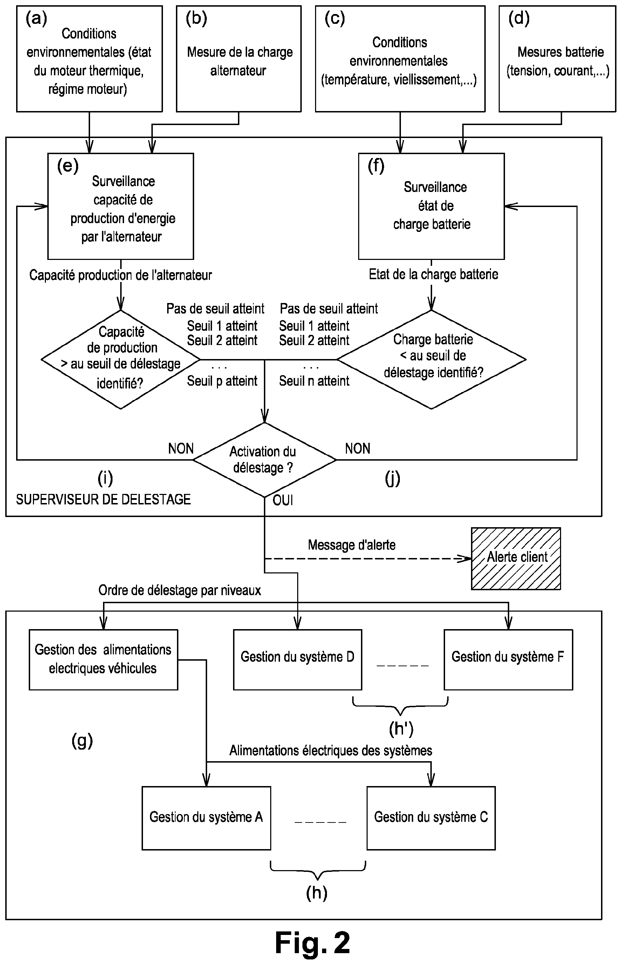

Une variante selon l'invention est illustrée à la figure 2. Le but est de déterminer le niveau de l'ordre de délestage à appliquer à partir d'une combinatoire de différents seuils de délestage associés à la capacité de production de l'alternateur (seuil 1 à p) et de différents seuils de délestage associés à l'état de charge de la batterie (seuil 1 à n) au lieu d'utiliser un seuil unique comme présenté en Figure 1. Ainsi, à chaque seuil est associé un délestage spécifique.

Cette variante s'accompagne implicitement d'un délestage par niveaux.

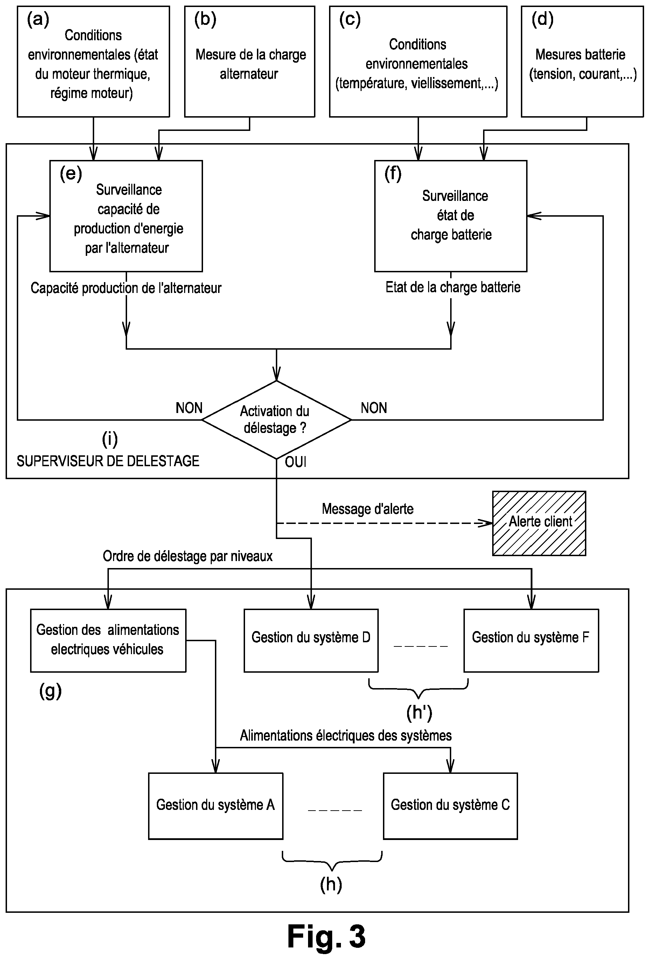

La figure 3 illustre un autre exemple dans lequel l'algorithme du module (i) de décision d'application du niveau de l'ordre de délestage se base directement sur les deux données principales qui sont la capacité de production de l'alternateur et l'état de charge de la batterie. La commande du délestage peut être par exemple fonction de la persistance de dépassement ou de rapprochement d'un seuil critique.

Cette solution induit une meilleure granularité dans le choix du niveau de l'ordre de délestage en fonction des deux données principales venant des blocs (e) et (f).

Cette solution permet également d'appliquer un niveau spécifique d'ordre de délestage (niveau de délestage le plus élevé par exemple) dans le cas d'une défaillance critique de la batterie (déconnexion ou court-circuit) du fait de la consommation direct de l'information de l'état de charge batterie venant du bloc (f).

De manière similaire, cette solution permet d'appliquer un niveau spécifique d'ordre de délestage (niveau de délestage le plus élevé par exemple) dans le cas d'une défaillance critique de l'alternateur (déconnexion, ou court-circuit) du fait de la consommation direct de l'information de la capacité de production de l'alternateur venant du bloc (e).

Il est à noter que l'application de l'ordre de délestage spécifique dans le cas d'une défaillance critique de la batterie ou de l'alternateur est compatible avec les deux premiers modes de réalisation (figure 1 et 2) en envoyant une information provenant respectivement des blocs (f) et (e) à l'organe de décision d'application de l'ordre de délestage (i).

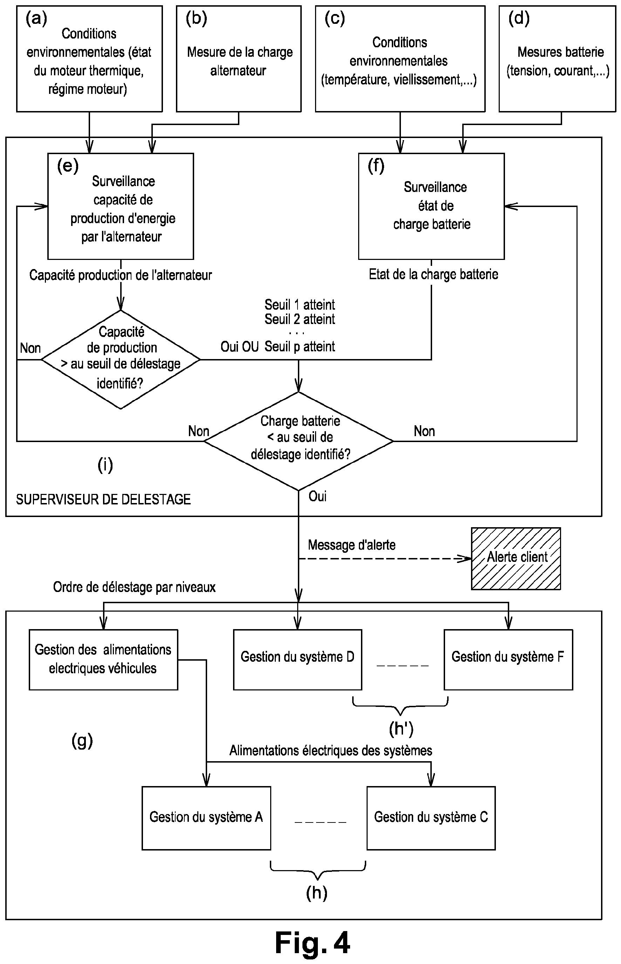

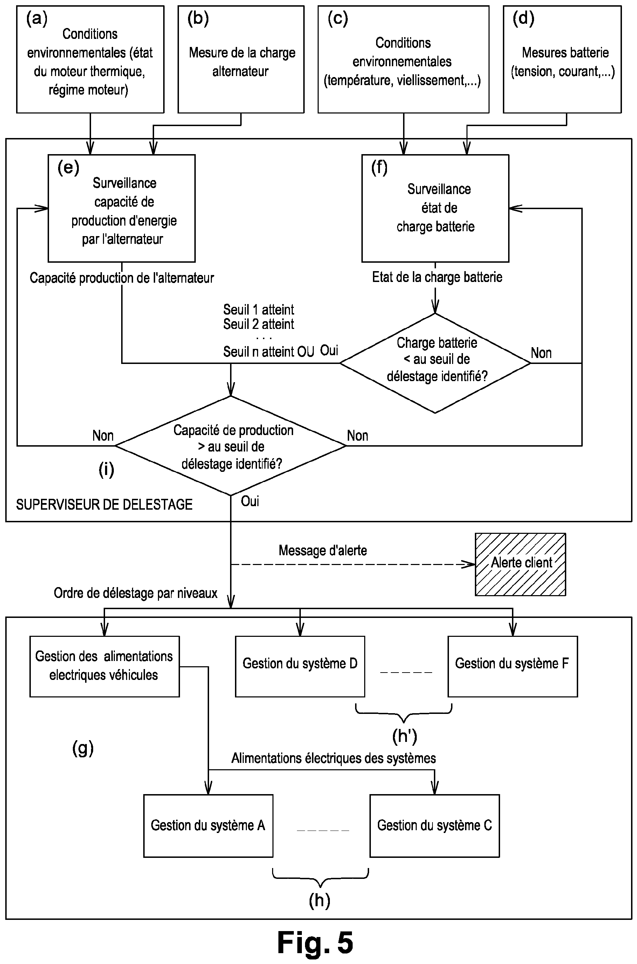

Les figures 4 et 5 illustrent deux autres modes de réalisation issus chacun d'une combinaison du procédé illustré à la figure 3 et du procédé illustré à la figure 1 ou 2. Ces modes de réalisation permettent de réduire la complexité de l'algorithme de décision d'application du niveau de l'ordre de délestage (i).

## Revendications

1. Procédé de gestion de l'alimentation de systèmes électriques d'un véhicule automobile muni d'une batterie et d'un alternateur, **caractérisé en ce qu'**il comprend :
- la détermination de la capacité de production électrique de l'alternateur,
- la détermination du niveau de charge de la batterie,
- la commande d'un délestage d'au moins un système électrique du véhicule, en fonction de la capacité de production électrique de l'alternateur et/ou du niveau de charge de la batterie chaque fois que la capacité de production électrique de l'alternateur ou le niveau de charge de la batterie atteint un seuil prédéterminé issu d'un groupe de seuils prédéterminés.

2. Procédé selon la revendication 1, **caractérisé en ce que** la commande d'un délestage n'est pas fonction de la puissance électrique consommée par les systèmes électriques du véhicule.

3. Procédé selon l'une des revendications 1 ou 2, **caractérisé en ce qu'**un délestage est commandé lorsque la capacité de production électrique de l'alternateur du véhicule ou le niveau de charge de la batterie présente une vitesse de variation prédéterminée, ou une persistance de dépassement ou de rapprochement du seuil prédéterminé.

4. Procédé selon l'une des revendications 1 à 3, **caractérisé en ce que** la capacité de production électrique de l'alternateur est déterminée en fonction de conditions environnementales et de la mesure de la charge de l'alternateur.

5. Procédé selon l'une des revendications 1 à 4, **caractérisé en ce que** le niveau de charge de la batterie est déterminé en fonction de conditions environnementales et de mesures de la tension et/ou du courant de la batterie.

6. Procédé selon l'une des revendications 1 à 5, **caractérisé en ce que** la commande de délestage est appliquée à un dispositif de gestion des alimentations électriques.

7. Procédé selon la revendication 7, **caractérisé en ce que** le dispositif de gestion des alimentations électriques est apte à commander des systèmes électriques aptes à être délestés en coupant leur alimentation.

8. Procédé selon l'une des revendications 1 à 7, **caractérisé en ce que** la commande de délestage est appliquée directement à des systèmes électriques.

## Patentansprüche

1. Verfahren zur Verwaltung der Versorgung von elektrischen Systemen eines Kraftfahrzeugs, das mit einer Batterie und mit einem Generator ausgestattet ist, **dadurch gekennzeichnet, dass** es enthält:
- die Bestimmung der Stromerzeugungskapazität des Generators,
- die Bestimmung des Ladepegels der Batterie,
- die Steuerung einer Entlastung mindestens eines elektrischen Systems des Fahrzeugs abhängig von der Stromerzeugungskapazität des Generators und/oder vom Ladepegel der Batterie immer dann, wenn die Stromerzeugungskapazität des Generators oder der Ladepegel der Batterie eine vorbestimmte Schwelle erreicht, die von einer Gruppe vorbestimmter Schwellen stammt.

2. Verfahren nach Anspruch 1, **dadurch gekennzeichnet, dass** die Steuerung einer Entlastung nicht von der von den elektrischen Systemen des Fahrzeugs verbrauchten elektrischen Leistung abhängt.

3. Verfahren nach einem der Ansprüche 1 oder 2, **dadurch gekennzeichnet, dass** eine Entlastung gesteuert wird, wenn die Stromerzeugungskapazität des Generators des Fahrzeugs oder der Ladepegel der Batterie eine vorbestimmte Änderungsgeschwindigkeit oder eine Persistenz eines Überschreitens der oder einer Annäherung an die vorbestimmte Schwelle aufweist.

4. Verfahren nach einem der Ansprüche 1 bis 3, **dadurch gekennzeichnet, dass** die Stromerzeugungskapazität des Generators abhängig von Umgebungsbedingungen und von der Messung der Ladung des Generators bestimmt wird.

5. Verfahren nach einem der Ansprüche 1 bis 4, **dadurch gekennzeichnet, dass** der Ladepegel der Batterie abhängig von Umgebungsbedingungen und von Messungen der Spannung und/oder des Stroms der Batterie bestimmt wird.

6. Verfahren nach einem der Ansprüche 1 bis 5, **dadurch gekennzeichnet, dass** die Entlastungssteuerung an eine Verwaltungsvorrichtung der Stromversorgungen angewendet wird.

7. Verfahren nach Anspruch 7, **dadurch gekennzeichnet, dass** die Verwaltungsvorrichtung der Stromversorgungen elektrische Systeme steuern kann, die entlastet werden können, indem ihre Versorgung abgeschaltet wird.

8. Verfahren nach einem der Ansprüche 1 bis 7, **dadurch gekennzeichnet, dass** die Entlastungssteuerung direkt an elektrische Systeme angewendet wird.

## Claims

1. Method for managing the power supply of electrical systems of a motor vehicle provided with a battery and an alternator, **characterized in that** it comprises:
- the determination of the electrical production capacity of the alternator,
- the determination of the level of charge of the battery,
- the control of a load-shedding of at least one electrical system of the vehicle, as a function of the electrical production capacity of the alternator and/or of the level of charge of the battery each time the electrical production capacity of the alternator or the level of charge of the battery reaches a predetermined threshold derived from a group of predetermined thresholds.

2. Method according to Claim 1, **characterized in that** the control of a load-shedding is not a function of the electrical power consumed by the electrical systems of the vehicle.

3. Method according to one of Claims 1 and 2, **characterized in that** a load-shedding is controlled when the electrical production capacity of the alternator of the vehicle or the level of charge of the battery exhibits a predetermined rate of variation, or a persistent overshooting of or closeness to the predetermined threshold.

4. Method according to one of Claims 1 to 3, **characterized in that** the electrical production capacity of the alternator is determined as a function of environmental conditions and of the measurement of the load of the alternator.

5. Method according to one of Claims 1 to 4, **characterized in that** the level of charge of the battery is determined as a function of environmental conditions and of measurements of the voltage and/or of the current of the battery.

6. Method according to one of Claims 1 to 5, **characterized in that** the load-shedding control is applied to an electrical power supply management device.

7. Method according to Claim 7, **characterized in that** the electrical power supply management device is capable of controlling electrical systems capable of being load-shed by cutting their power supply.

8. Method according to one of Claims 1 to 7, **characterized in that** the load-shedding control is applied directly to electrical systems.
